# EUROPEAN PATENT APPLICATION

(11) **EP 2 808 617 A2**
(43) Date of publication of application: **03.12.2014**
(21) Application number: 14382196.5
(22) Date of filing: 28.05.2014
(51) Int. Cl.: F24J 2/40, F24J 2/46

(54) **Solar panel with screening system**

(30) Priority: 29.05.2013 ES 201330788
(71) Applicant: Lasierra Toldra, Antoni, 08401 Granollers (Barcelona) (ES); Retana Pendon, Alberto Miguel, 08401 Granollers (Barcelona) (ES)
(72) Inventor: Retana Pendon, Alberto Miguel, 08401 GRANOLLERS (BARCELONA) (ES)
(74) Representative: Durán-Corretjer, S.L.P.

(57) **Abstract**

Solar panel with a screening system, of the type that has a main body with a glass surface (2) to allow the rays of the sun to enter and a perimeter frame (1) that defines an internal volume in which a flat plate collector (7) is located connected to tubes (3) for the heat transfer fluid, said internal volume comprising a screen (4) provided with actuation means (6) for positioning the screen (4) between said glass surface (2) and the flat plate collector (7).

## Description

The present invention relates to collectors that make thermal use of solar energy, generally known as solar panels or solar thermal collectors.

An important problem with forced convection solar panel installations occurs when there is an excess fluid temperature in the secondary circuit. In these situations the primary circuit pump stops and the temperature in the panel increases until it reaches what is known as the stagnation temperature, which is the temperature at which the heat losses from the panel are equal to the energy gains obtained from the rays of the sun. Flat rather than evacuated panels (the most common) have a stagnation temperature of between 180°C and 220°C. In the case of evacuated panels, the problem is more serious, as their stagnation temperature can exceed 340°C. There is a risk when this temperature is reached as at these temperatures, even when using heat transfer fluids with a high boiling point, the fluid is degraded and in turn produces excess pressure which can trip the safety valves, which then drains some of the above-mentioned fluid from the primary circuit.

To solve this problem, various types of solution are known, which can be classified according to the way in which they avoid overheating of the panel:

A first type of solution consists of preventing the rays of the sun from falling on an absorber plate. This type of solution includes installing protective outer covers which shield the collector and can be actuated manually or automatically with external slatted blinds fitted on the panel. Manual shielding from the rays of the sun using covers has the major drawback of requiring manual actuation in areas that are not very accessible such as roofs and the drawback of having to repeat the action when the panel needs to be uncovered again, requiring repeated actions during the same day to optimise the output of the installation. On the other hand, automatically actuated exterior covers or slatted blinds remedy this drawback but do not solve the problem of the blinds being subject to inclement weather, with significant damage from chemical and mechanical agents, and the additional drawback of the lack of architectural integration.

A second type of solution consists of preventing heating of the heat transfer fluid. The main solution of this type is the drain-back system, which basically consists of drawing off the heat transfer fluid from the primary circuit at a pre-determined temperature to thus prevent it from overheating, being degraded or evaporating. The drawback of this is that it is a physically and technologically more complicated system and has a large number of elements reducing its durability.

Finally, a third type of solution consists of dissipating the excess heat of the heat transfer fluid. In this type of solution, heat exchangers are used, either by natural or forced convection, which are actuated at a pre-determined temperature. Among the notable drawbacks of these systems is the high energy consumption required to eliminate the excess temperature (forced convection), poor architectural integration (mainly natural convection) and the generation of environmental noise (forced convection).

An object of the present invention is to disclose an automatic system to prevent the rays of the sun from striking the panel which does not have the above-mentioned drawbacks. According to the present invention, this is achieved by incorporating the screen system inside the volume of the collector itself, the screen system being completely protected from bad weather. The present invention also has the additional advantage of being perfectly integrated architecturally.

More particularly, the present invention comprises a solar panel with a screening system, of the type that has a main body with a glass surface to allow the rays of the sun to enter and a perimeter frame that defines an internal volume in which a flat plate collector is located connected to tubes for the heat transfer fluid, which comprises in said internal volume a screen provided with actuation means for positioning the screen between said glass surface and the flat plate collector.

Document DE 3019242 discloses a solar panel with a screening system arranged inside the panel with actuation means that position the canvas screen between the glass surface and the collector. The canvas is moved between two or four actuation cylinders located at opposite ends of the panel. The introduction of the actuation means disclosed in this document increases the volume of the collector and hence its cost.

Document DE 2622718 discloses a collector with actuation means for a single canvas screen actuated from the outside by a rod which passes through the surface of the collector plate. The aperture needed for the rod to pass through reduces the efficiency of the equipment and actuation is not reliable.

An object of the present invention is to disclose a way of obtaining a screen that can be actuated with minimal change in the dimensions and operation of the solar panel.

To achieve this object, the present invention comprises a solar panel with a screening system, of the type that has a main body with a glass surface to allow the rays of the sun to enter and a perimeter frame that defines an internal volume in which a flat plate collector or flat plate absorber is located connected to tubes for the heat transfer fluid, said internal volume comprising a screen for covering the flat plate collector, said screen being provided with actuation means for positioning the screen between said glass surface and the flat plate collector, characterised in that the actuation means comprise a single drum for actuating the screen, and in that it has guides on both sides for guiding the movement of the screen.

The combination of guides and drum means that it occupies minimum space inside the solar panel and does not need to be combined with external actuation means, which would require holes to be drilled in the frame of the panel and would make actuation more difficult.

In one embodiment, the screen travels in linear translation with no rolling up between an active position in which it is positioned between the glass surface and the flat plate collector and an inactive position in which it is situated behind the flat plate collector, allowing the rays of the sun to strike the flat plate collector.

In both cases, preferably, the panel has guides on both sides for guiding the movement of the screen.

In a particularly preferable way, the panel has a screen actuation motor actuated by a controller which actuates the motor according to a program. For example, the controller is able to actuate the motor depending on the temperature of the heat transfer fluid.

The present invention relates to a screen situated inside the panel. The present invention provides for the screen to be rolled up or to slide. During normal operation of the collector, the screen, which may be a piece of canvas or a slatted blind, is rolled up or hidden behind the lower insulation and allows the rays of the sun to strike the heat absorber plate. In a preferred embodiment, when the heat transfer fluid or the accumulator exceed a set temperature, a mechanism is automatically actuated which shields the absorber plate by unrolling or sliding the screen (canvas or slatted blind) until it covers the absorber plate.

The screen and the actuation thereof can be produced, for example, in four possible ways:
1) Rolled canvas blind. This option is preferred for the normal angles of inclination of the panel (45 to 65° angle of inclination), because the canvas blind does not take up space once it is unwound (covering the collector) and nor does it occupy much space when it is rolled up, as this space is limited to the diameter of the take up / traction core plus the thickness of the rolled canvas. The space needed can be calculated as the length x depth x width of the panel, which indicates that with some 90-110 mm extra length, the shading system can be incorporated in the collector. In the options using canvas blinds it is preferable to create reinforcements across the panel to prevent the canvas from coming into contact with the absorber plate, which could damage said canvas. Being actuated by gravity, the system is particularly suitable where the panel is inclined at a steep angle. Among the advantages of this system compared with the other three options is the possibility of producing canvas blinds with finishes to suit the customer as regards colour and/or patterns, providing excellent architectural integration.
2) Sliding slatted blind. The preferred option for gentle angles of inclination of the panel. The space occupied by the system is that of the take-up / traction core in the longitudinal direction and in terms of depth it remains the same as that of the panel without an automatic device if the thickness of the insulation is reduced by the same amount as the depth of the profile of the slatted blind. Unlike the canvas blind, in this case it is preferable to provide a space between the lower insulation and cover of the panel, which involves a larger number of parts. However, it produces a more robust system as it is rigid, which prevents wrinkles in the canvas.
3) Sliding canvas blind. In this case, the system preferably has a toothed actuation device so that the canvas slides.
4) Rolled slatted blind. This option is suitable for panels with a large interior depth and for mounting on slopes that are not gentle.

This system can be actuated either from within the collector and independently of the solar installation by means of a temperature sensor inside the collector or by means of a relay arranged in the control panel of the solar installation. In short, the controller can be independent and positioned inside the solar panel or it can be located in an external control panel.

The internal arrangement of the screen prevents damage thereto, increases its efficiency and facilitates the installation of a control system that depends on the temperature of the heat transfer fluid.

For a better understanding of the invention, the accompanying drawings are provided as an explanatory but non-limiting example of an embodiment of the solar panel according to the present invention.

Fig. 1 shows a perspective view of a solar panel according to the present invention with the screen at an intermediate point of its travel. For clarity, the flat plate collector -7- has been shown as transparent, but it should be understood that it usually has a black surface.

Fig. 2 corresponds to Fig. 1 with the screen in the closed position.

Fig. 3 is a view partly in cross-section of a detail of one of the corners of the embodiment of Fig. 2.

Fig. 4 is a longitudinal cross-section along the plane IV-IV of Fig. 1 showing a screen actuation system.

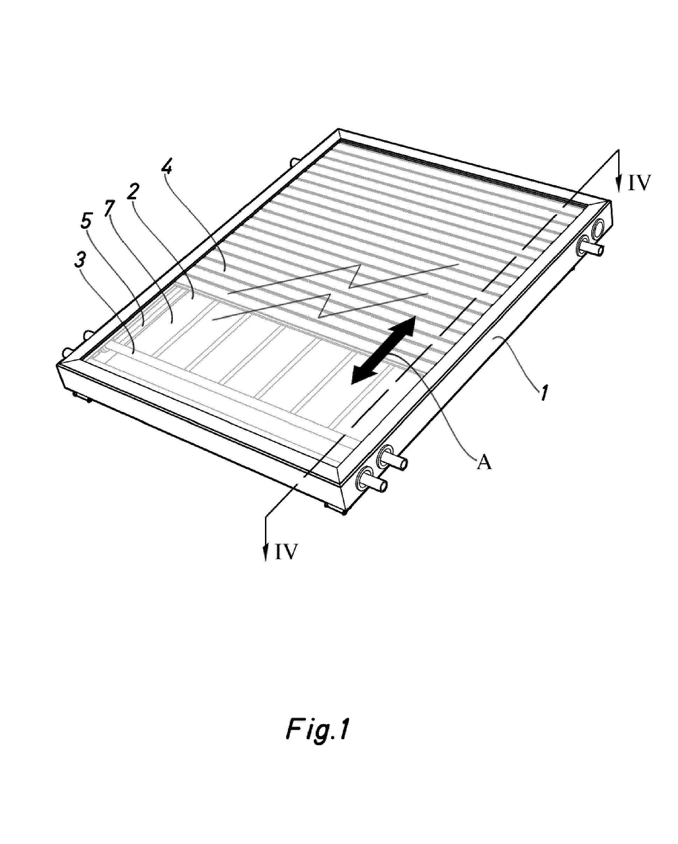

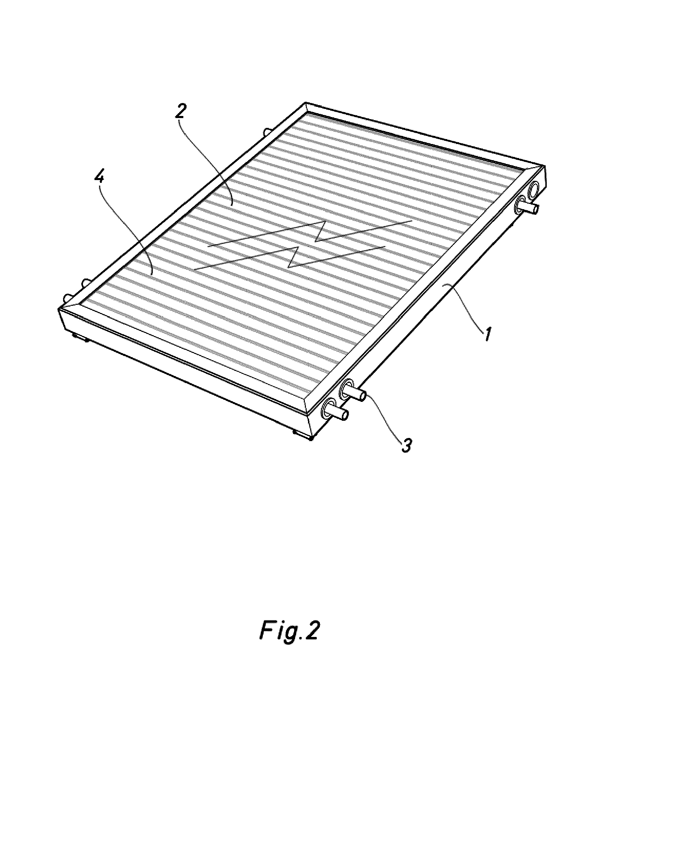

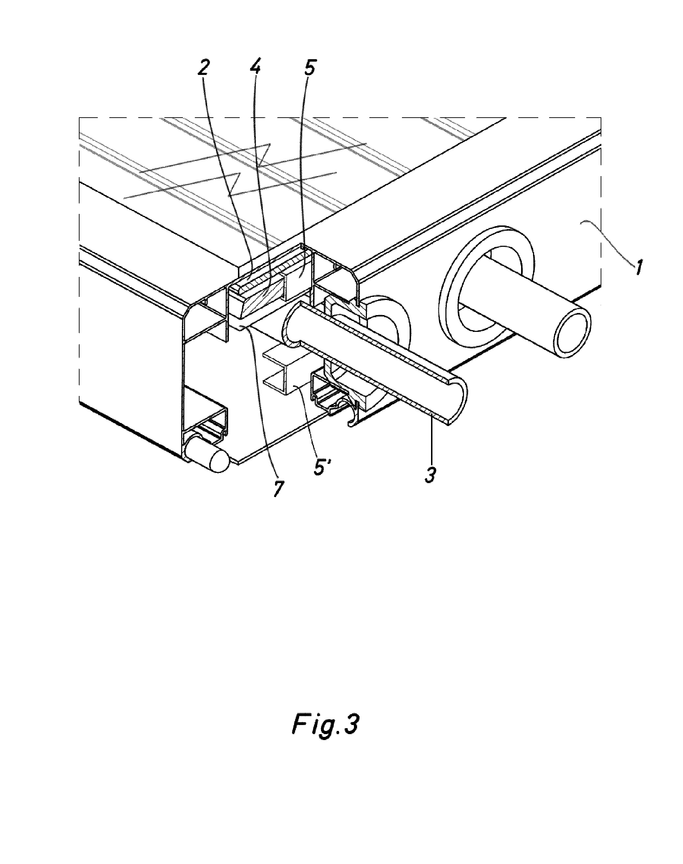

An embodiment of the present invention can be seen in Figs. 1 to 4 consisting of a solar panel with an outer casing -1- and a transparent or glass surface -2-. Inside there is a tube circuit -3- for the heat transfer circuit. Characteristically, according to the invention, there is a screen inside the casing -1-, more specifically a slatted blind -4- which moves along guides -5- and which continues in a linear movement -A- until it completely covers the flat plate collector, preventing the rays of the sun from reaching the flat plate collector -7-.

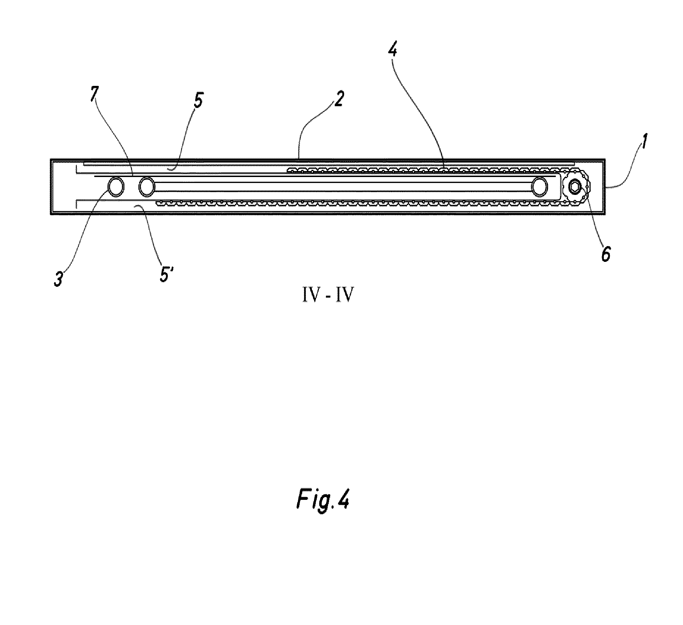

The slatted blind -4- is actuated by means of a cylinder and drum assembly -6-. As can be seen in the figures, there is only one cylinder and drum assembly -6-. Although in an embodiment that has not been shown the slatted blind -4- could be rolled around the drum -6-, in the embodiment shown, when the drum revolves uncovering the flat plate collector -7- to the rays of the sun which pass through the glazed surface -2-, the slatted blind -4- runs along the lower guides until it is positioned, extended, behind the tubes -3- as can be seen in Fig. 4. In short, the cylinder and drum assembly -6- can take in the screen, by rolling it or, more preferably, can simply be part of the screen actuation system between an active screening position and a passive position with no screening, in both positions being flat.

Although the invention has been described with respect to preferred embodiments, these should not be considered as limiting the invention, which should be defined by the widest interpretation of the following claims.

## Claims

1. Solar panel with a screening system, of the type that has a main body with a glass surface to allow the rays of the sun to enter and a perimeter frame that defines an internal volume in which a flat plate collector is located connected to tubes for the heat transfer fluid, said internal volume comprising a screen for covering the flat plate collector, said screen being provided with actuation means for positioning the screen between said glass surface and the flat plate collector, **characterised in that** the actuation means comprise a single drum for actuating the screen, and **in that** it has guides on both sides for guiding the movement of the screen.

2. Panel, according to claim 1, **characterised in that** the screen travels in linear translation with no rolling up between an active position in which it is positioned between the glass surface and the flat plate collector, and an inactive position in which it is situated behind the flat plate collector, allowing the rays of the sun to strike the flat plate collector.

3. Panel, according to either claim 1 or claim 2, **characterised in that** the screen is a canvas blind.

4. Panel, according to any one of claims 1 to 3, **characterised in that** the screen is a slatted blind.

5. Panel, according to any one of claims 1 to 4, **characterised in that** it has a screen actuation motor actuated by a controller which actuates the motor according to a program.

6. Panel, according to claim 5, **characterised in that** the controller actuates the motor depending on the temperature of the heat transfer fluid.
